# EUROPÄISCHE PATENTANMELDUNG

(11) **EP 2 808 193 A1**
(43) Veröffentlichungstag der Anmeldung: **03.12.2014**
(21) Anmeldenummer: 14169386.1
(22) Anmeldetag: 22.05.2014
(51) Int. Cl.: B60K 15/03, B60K 15/035

(54) **Flüssigkeitstank für ein Kraftfahrzeug**

(30) Priorität: 29.05.2013 DE 102013105522
(71) Anmelder: VERITAS AG, 63571 Gelnhausen (DE)
(72) Erfinder: Rösch, Thomas, 63589 Linsengericht (DE); Maiberger, Simon, 63599 Biebergemünd (DE)
(74) Vertreter: Klinski, Robert

(57) **Zusammenfassung**

Die vorliegende Erfindung betrifft einen Flüssigkeitstank (100) für ein Kraftfahrzeug, mit einem ersten Verbindungselement (101-1), das sich von einer Innenwandung (103) des Flüssigkeitstanks (100) in das Innere (105) des Flüssigkeitstanks (100) erstreckt; einem zweiten Verbindungselement (101-2), das sich von der Innenwandung (103) des Flüssigkeitstanks (100) in das Innere (105) des Flüssigkeitstanks (100) erstreckt und das an einer Verbindungsstelle (107) mit dem ersten Verbindungselement (101-2) verbunden ist, und einer Durchtrittsöffnung (109) zum Durchleiten eines Fluids, die in dem ersten oder zweiten Verbindungselement (101-1, 101-2) angeordnet ist.

## Beschreibung

Die vorliegende Erfindung betrifft einen Flüssigkeitstank für ein Kraftfahrzeug.

Bei Flüssigkeitstanksystemen kann im Inneren des Flüssigkeitstanks ein Tauchrohr mit einer Öffnung gebildet sein, durch die eine Flüssigkeit ab einem Erreichen eines bestimmten Pegels hindurchtritt. Das Tauchrohr ist an einer Wand des Flüssigkeitstanks befestigt. Dehnt sich der Flüssigkeitstank aus oder zieht sich der Flüssigkeitstank zusammen, wie beispielsweise bei unterschiedlichen Druckverhältnissen, so verändert sich die Lage der Öffnung im Inneren des Flüssigkeitstanks. Ein Flüssigkeitsstand kann in diesem Fall nicht mehr exakt erfasst werden.

Es ist die der Erfindung zugrundeliegende Aufgabe, einen Flüssigkeitstank anzugeben, bei dem das Verändern der Lage einer Durchtrittsöffnung für ein Fluid verhindert wird, wie beispielweise bei einer Deformation des Flüssigkeitstanks bei erhöhtem Druck.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Flüssigkeitstank für ein Kraftfahrzeug gelöst, mit einem ersten Verbindungselement, das sich von einer Innenwandung des Flüssigkeitstanks in das Innere des Flüssigkeitstanks erstreckt; einem zweiten Verbindungselement, das sich von der Innenwandung des Flüssigkeitstanks in das Innere des Flüssigkeitstanks erstreckt und das an einer Verbindungsstelle mit dem ersten Verbindungselement verbunden ist; und einer Durchtrittsöffnung zum Durchleiten eines Fluids, die in dem ersten oder zweiten Verbindungselement angeordnet ist. Das Fluid kann Luft oder eine Flüssigkeit sein. Dadurch wird beispielsweise der technische Vorteil erreicht, dass durch eine beidseitige mechanische Anbindung zwischen einem Boden und einer Decke des Flüssigkeitstanks ein Verbiegen einer Wandung des Flüssigkeitstanks verhindert wird, beispielsweise bei einem Verzug der Deckenfläche oder aufgrund von Gasdruck oder Eisdruck. Ein Aufblähen oder Zusammenziehen des Flüssigkeitstanks kann aufgrund der Verbindungselemente verhindert werden. Durch die in dem Verbindungselement angeordnete Durchtrittsöffnung kann beispielsweise eine Veränderung der Abschaltniveaus verhindert werden, das durch die Lage der Durchtrittsöffnung definiert wird. Durch die miteinander verbundenen Verbindungselemente und die Durchtrittsöffnungen kann beispielsweise eine stabile Ausführung eines Tauchrohres erzielt werden. Zudem wird eine Integration von Funktionen in wenige Bauteile und eine Gewichtersparnis erreicht. Daneben kann eine Platzersparnis durch kompakten Bauraum erzielt werden.

In einer vorteilhaften Ausführungsform des Flüssigkeitstanks ist die Durchtrittsöffnung benachbart zu der Verbindungsstelle zwischen dem ersten und dem zweiten Verbindungselement angeordnet. Dadurch wird beispielsweise der technische Vorteil erreicht, dass die Durchtrittsöffnung im Inneren des Tanks liegt und sich die Stabilität im Bereich der Durchtrittsöffnung verbessert.

In einer weiteren vorteilhaften Ausführungsform des Flüssigkeitstanks ist die Durchtrittsöffnung benachbart zu der Innenwandung des Flüssigkeitstanks angeordnet. Dadurch wird beispielsweise der technische Vorteil erreicht, dass der Flüssigkeitstank vollständig mit einer Flüssigkeit gefüllt werden kann, bevor diese durch die Durchtrittsöffnung hindurchtritt.

In einer weiteren vorteilhaften Ausführungsform des Flüssigkeitstanks ist innerhalb des zweiten Verbindungselementes ein U-förmiger Kanal für einen Flüssigkeitsverschluss gebildet. Dadurch wird beispielsweise der technische Vorteil erreicht, dass Dämpfe nicht aus dem Inneren des Flüssigkeitstanks entweichen können.

In einer weiteren vorteilhaften Ausführungsform des Flüssigkeitstanks weist das zweite Verbindungselement ein Sieb zum Filtern des Fluids auf. Dadurch wird beispielsweise der technische Vorteil erreicht, dass Fremdkörper eines Fluids, das durch die Durchtrittsöffnung hindurchtritt, zurückgehalten werden können und sich ein kompakter Aufbau des Flüssigkeitstanks bei einer weiteren Funktionsintegration ergibt.

In einer weiteren vorteilhaften Ausführungsform des Flüssigkeitstanks weist das zweite Verbindungselement ein Ventil zum Sperren einer Fluidrichtung auf. Dadurch wird beispielsweise der technische Vorteil erreicht, dass der Durchtritt des Fluids richtungsmäßig gesteuert werden kann und sich ein kompakter Aufbau des Flüssigkeitstanks bei einer weiteren Funktionsintegration ergibt.

In einer weiteren vorteilhaften Ausführungsform des Flüssigkeitstanks weist das zweite Verbindungselement eine Mehrzahl von Durchtrittsöffnungen auf. Dadurch wird beispielsweise der technische Vorteil erreicht, dass auch bei der Verstopfung einer Durchtrittsöffnung weitere Durchtrittsöffnungen zur Verfügung stehen.

In einer weiteren vorteilhaften Ausführungsform des Flüssigkeitstanks liegt eine erste Durchtrittsöffnung der Mehrzahl von Durchtrittsöffnungen gegenüber einer zweiten Durchtrittsöffnung der Mehrzahl von Durchtrittsöffnungen. Dadurch wird beispielsweise der technische Vorteil erreicht, dass bei einer Verstopfung einer Durchtrittsöffnung durch einen schwimmenden Gegenstand auf der einen Seite des Verbindungselementes das Fluid noch durch die Durchtrittsöffnung auf der gegenüberliegenden Seite strömen kann.

In einer weiteren vorteilhaften Ausführungsform des Flüssigkeitstanks sind die Durchtrittsöffnungen entlang des zweiten Verbindungselementes angeordnet. Dadurch wird beispielsweise der technische Vorteil erreicht, dass das Fluid in jeder Höhe aus oder in den Flüssigkeitstank strömen kann.

In einer weiteren vorteilhaften Ausführungsform des Flüssigkeitstanks ist das zweite Verbindungselement durch eine Trennwand in eine erste Kammer und eine zweite Kammer unterteilt. Dadurch wird beispielsweise der technische Vorteil erreicht, dass ein Aufbau mit unabhängigen Kammern erzielt wird, die jeweils mit Durchtrittsöffnungen für unterschiedliche Zwecke versehen sein können.

In einer weiteren vorteilhaften Ausführungsform des Flüssigkeitstanks umfasst die erste Kammer eine erste Durchtrittsöffnung zum Befüllen des Flüssigkeitstanks und die zweite Kammer eine Durchtrittsöffnung zum Entlüften des Flüssigkeitstanks. Dadurch wird beispielsweise der technische Vorteil erreicht, dass sowohl eine Befüllung als auch eine Entlüftung innerhalb des gleichen Verbindungselementes realisiert wird und ein Aufbau noch weiter kompaktifiziert wird.

In einer weiteren vorteilhaften Ausführungsform des Flüssigkeitstanks umfasst das zweite Verbindungselement einen Schwimmer. Dadurch wird beispielsweise der technische Vorteil erreicht, dass sich der Füllstand innerhalb des Verbindungselementes ermitteln lässt.

In einer weiteren vorteilhaften Ausführungsform des Flüssigkeitstanks weist die Verbindungsstelle zum Durchleiten des Fluids zwischen dem ersten Verbindungselement und dem zweiten Verbindungselement auf. Dadurch wird beispielsweise der technische Vorteil erreicht, dass das Fluid zu einer entgegengesetzten Seite des Flüssigkeitstanks geleitet werden kann.

In einer weiteren vorteilhaften Ausführungsform des Flüssigkeitstanks ist der Flüssigkeitstank aus einer ersten Flüssigkeitstankschale mit dem ersten Verbindungselement und einer zweiten Flüssigkeitstankschale mit dem zweiten Verbindungselement zusammengesetzt. Dadurch wird beispielsweise der technische Vorteil erreicht, dass der Flüssigkeitstank auf einfache Weise hergestellt werden kann.

In einer weiteren vorteilhaften Ausführungsform des Flüssigkeitstanks weist das erste oder das zweite Verbindungselement eine Zylinderform auf. Dadurch wird beispielsweise der technische Vorteil erreicht, dass die Verbindungselemente Zugkräfte übertragen können, ohne sich zu verformen.

Ausführungsbeispiele der Erfindung sind in den Zeichnungen dargestellt und werden im Folgenden näher beschrieben.

Es zeigen:
- Fig. 1: eine schematische Ansicht eines Flüssigkeitstanks;
- Fig. 2: eine weitere schematische Ansicht eines Flüssigkeitstanks;
- Fig. 3: eine weitere schematische Ansicht eines Flüssigkeitstanks;
- Fig. 4: eine weitere schematische Ansicht eines Flüssigkeitstanks; und
- Fig. 5: eine weitere schematische Ansicht eines Flüssigkeitstanks.

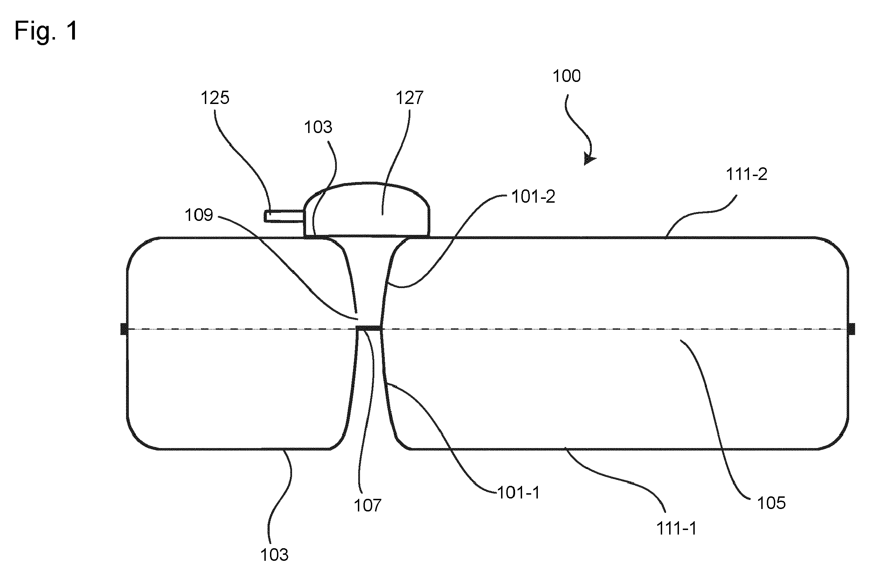

Fig. 1 zeigt eine schematische Ansicht eines Flüssigkeitstanks 100 für ein Kraftfahrzeug. Der Flüssigkeitstank 100 ist aus einer ersten Flüssigkeitstankschale 111-1 und einer zweiten Flüssigkeitstankschale 111-2 zusammengesetzt, die am Rand fluiddicht miteinander verschweißt sind. Die erste Flüssigkeitstankschale 111-1 weist ein erstes Verbindungselement 101-1 auf, das sich von einer Innenwandung 103 in das Innere 105 des Flüssigkeitstanks 100 erstreckt. Die zweite Flüssigkeitstankschale 111-2 weist ein zweites Verbindungselement 101-2 auf, das sich von einer Innenwandung 103 des Flüssigkeitstanks 100 in das Innere 105 des Flüssigkeitstanks 100 erstreckt.

Die Flüssigkeitstankschalen 111-1 und 111-2 sind beispielsweise Kunststoffformteile, die im Spritzgussverfahren hergestellt sind. Die Kunststoffe können beispielsweise Polyolefine wie Polyethylen oder Polypropylen, Polycarbonat, Polystyrol, Polyamid oder Polyoxymethylen (POM) umfassen.

Das erste und das zweite Verbindungselement 101-1 und 101-2 berühren sich an einer Verbindungsstelle 107 und sind an dieser miteinander verbunden. Die Verbindung der beiden Verbindungselemente 101-1 und 101-2 kann durch ein Verschweißen realisiert sein. Dadurch verbinden die Verbindungselemente 101-1 und 101-2 innerlich im Flüssigkeitstank 100 eine Boden- und die Deckfläche mechanisch miteinander und vermindern Deformationen der Tankgeometrie bei Über- oder Unterdruck, wie beispielsweise ein Ausbeulen oder Zusammenziehen. Die Verbindungselemente 101-1 und 101-2 sind mit einer rohrförmigen Geometrie ausgeführt. Im Allgemeinen können im Inneren des Flüssigkeitstanks 100 auch mehrere Verbindungselemente angeordnet sein. Daneben umfasst das zweite Verbindungselement 101-2 eine Durchtrittsöffnung 109 zum Hindurchtreten eines Fluids. Das Fluid kann beispielsweise Luft, Wasser oder ein Kraftstoff sein.

Die Verbindungselemente 101-1 und 101-2 bilden einen Zuganker oder Verbindungsdom zwischen beiden Seiten des Flüssigkeitstanks 100. Da eine Ausdehnung des Flüssigkeitstanks 100 durch die Verbindungselemente 101-1 und 101-2 verhindert wird, kann sichergestellt werden, dass sich die Durchtrittsöffnung 109 stets an der vorgesehenen Position im Inneren des Flüssigkeitstanks 100 befindet. An der Oberseite des Flüssigkeitstanks 100 ist eine Haube 127 mit einem Anschluss 125 gebildet, wie beispielsweise einem Belüftungsanschluss. Die Durchtrittsöffnung 109 ist benachbart zu der Verbindungsstelle 107 zwischen dem ersten und dem zweiten Verbindungselement 101-1 und 101-2 gebildet. Dadurch lassen sich die Funktionen des Tauchrohrs und eines Zugankers in einem einzigen multi-funktionalen Bauteil zusammenfassen.

Durch die Durchtrittsöffnung 109 in dem Verbindungselement 102-1 wird beispielsweise ein Tauchrohr gebildet, das zum Abschalten einer Befüllentlüftung beim Betanken dient. Das Tauchrohr wird dadurch mit den Verbindungselementen 102-1 und 101-2 kombiniert. Das von oben in das Innere 105 des Flüssigkeitstanks 100 hineinragende, rohrförmige Verbindungselement 101-2 führt die beim Befüllen verdrängte Luft aus dem Flüssigkeitstank 100 ab. Wenn der ansteigende Flüssigkeitsspiegel die Durchtrittsöffnung 109 überspült, kann keine weitere Luft mehr entweichen.

In der Folge erhöht sich der Druck in der verbleibenden Luftblase im Flüssigkeitstank 100. Dadurch steigt das Fluid in einem Einfüllrohr zu dem Flüssigkeitstank 100 über das Niveau des Flüssigkeitsspiegels im Flüssigkeitstank 100 hinaus an. Dies führt zu einem Abschalten der Zapfpistole, ohne dass der Flüssigkeitstank 100 überfüllt wird. Auf diese Weise wird verhindert, dass der Flüssigkeitstank 100 über ein vordefiniertes Niveau hinaus gefüllt wird

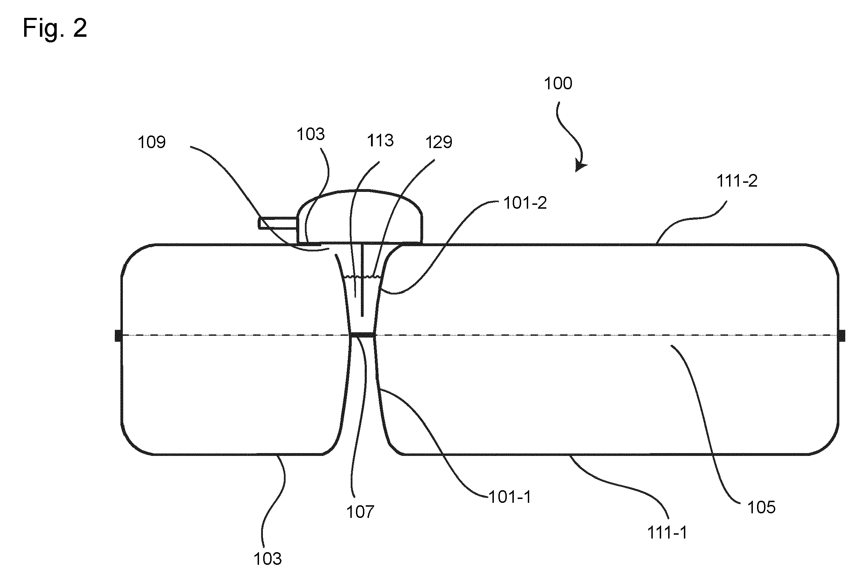

Fig. 2 zeigt eine schematische Ansicht einer weiteren Ausführungsform des Flüssigkeitstanks 100. In dieser Ausführungsform ist die Durchtrittsöffnung 109 benachbart zu der Innenwandung 103 des Flüssigkeitstanks 100 gebildet. Hierdurch kann die Durchtrittsöffnung 109 zum vollständigen Entlüften des Flüssigkeitstanks 100 verwendet werden. Zusätzlich ist im Inneren des Verbindungselementes 101-2 ein U-förmiger Kanal 113 für einen Flüssigkeitsverschluss gebildet. Die Schwerkraft hält einen Teil der Flüssigkeit 129 in einem unteren Teil des U-förmigen Kanals 113, so dass die Flüssigkeit 129 einen gasdichten Verschluss bildet.

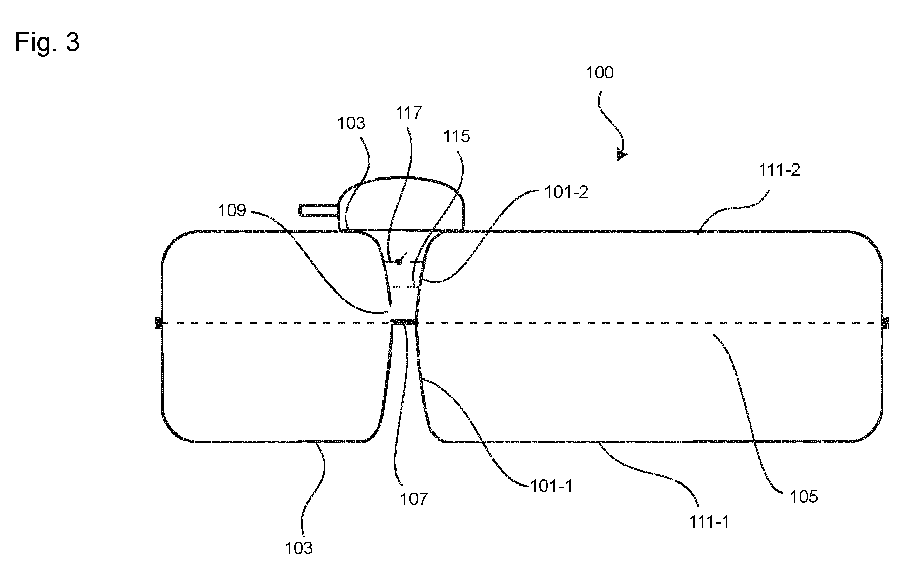

Fig. 3 zeigt eine schematische Ansicht einer weiteren Ausführungsform des Flüssigkeitstanks 100. Das Verbindungselement 101-2 umfasst ein Sieb 115 zum Filtern des Fluids. Durch das Sieb 115 werden Fremdkörper zurückgehalten, die sich im Fluidstrom durch das Verbindungselement 101-2 befinden. Auf diese Weise lässt sich eine weitere Funktion in das Innere des Verbindungselementes 101-2 integrieren, so dass sich eine noch höhere Platzersparnis ergibt.

Zusätzlich umfasst das zweite Verbindungselement 101-2 ein Ventil 117 zum Sperren einer Fluidrichtung. Das Ventil 117 ist beispielsweise eine Rückschlagklappe oder ein Rückschlagventil, das die Strömung des Fluids in nur einer Richtung zulässt. Auf diese Weise lässt sich die Strömungsrichtung im Inneren des Verbindungselementes 101-2 steuern.

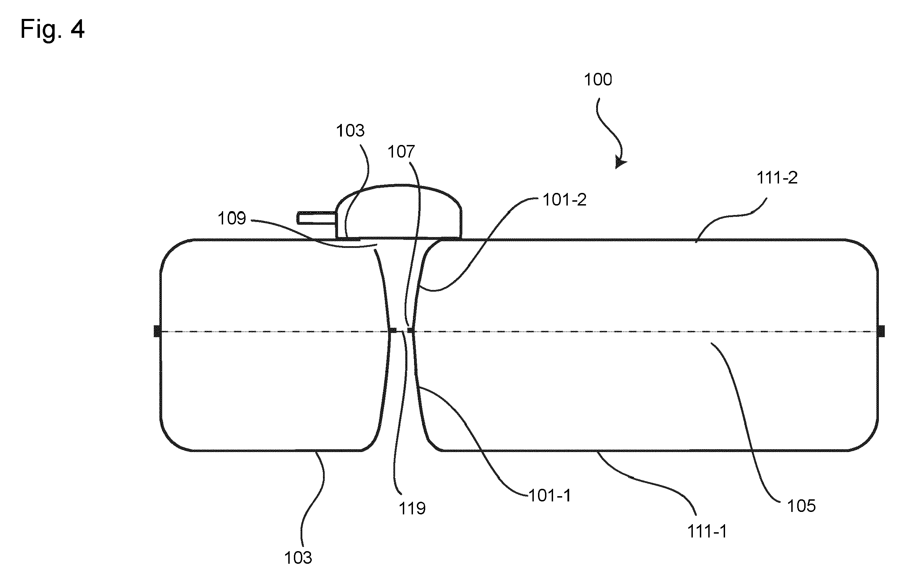

Fig. 4 zeigt eine schematische Ansicht einer weiteren Ausführungsform des Flüssigkeitstanks 100. In dieser Ausführungsform weist die Verbindungsstelle 107 eine Verbindungsöffnung 119 auf. Über diese Verbindungsöffnung 119 lässt sich das Fluid, das durch die Durchtrittsöffnung 117 ein- oder austritt, auf die Gegenseite des Flüssigkeitstanks 100 leiten.

Die Durchtrittsöffnung 109 ist im Bereich der Innenwandung 103 des Flüssigkeitstanks 100 gebildet. Im Allgemeinen kann das Verbindungselement 101-2 eine Mehrzahl unterschiedlich angeordneter Durchtrittsöffnungen aufweisen. Beispielsweise kann im dem Verbindungselement 101-2 eine Durchtrittsöffnung gegenüber einer anderen Durchtrittsöffnung angeordnet sein. Bei einer Verstopfung der einen Durchtrittsöffnung durch einen schwimmenden Gegenstand kann in diesem Fall das Fluid noch durch die andere Durchtrittsöffnung auf der gegenüberliegenden Seite strömen. Dadurch lässt sich beispielsweise ein Flüssigkeitsdurchtritt in das Verbindungselement 102-1 sicherstellen.

Weiter können mehrere Durchtrittsöffnungen in Längsrichtung entlang des zweiten Verbindungselementes 101-2 angeordnet sein. In diesem Fall kann das Fluid in jeder Höhe aus oder in den Flüssigkeitstank strömen. Daneben kann in dem Verbindungselement 101-2 ein nicht-gezeigter Schwimmer vorgesehen sein. Die Lage des Schwimmers verändert sich mit dem Flüssigkeitspegel im Inneren des Verbindungselementes 101-2. Dies kann beispielsweise dazu verwendet werden, dass der Schwimmer eine im oberen Teil des Verbindungselementes 101-2 angeordnete Entlüftungsöffnung bei Erreichen eines vorgegebenen Füllstandes im Flüssigkeitstank 100 verschließt. Dadurch kann ein Schwimmerventil im Inneren des Flüssigkeitstanks 100 realisiert werden.

Vorteilhaft ist zudem eine Zylinderform der Verbindungselemente 101-1 und101-2, da in diesem Fall Zugkräfte geradlinig zwischen den Wandungen des Flüssigkeitstanks 100 übertragen werden können, ohne Verformungen in den Verbindungselementen 101-1 und 101-2 zu erzeugen.

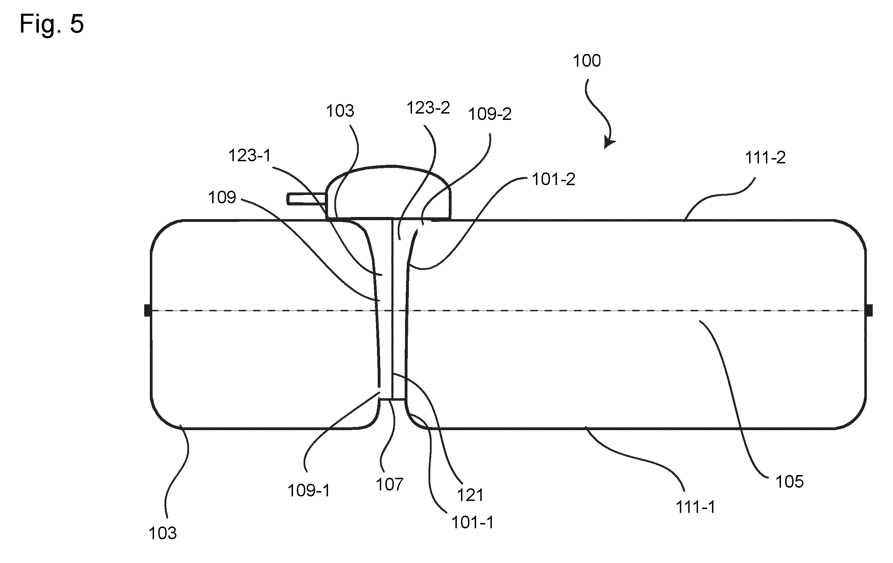

Fig. 5 zeigt eine schematische Ansicht einer weiteren Ausführungsform des Flüssigkeitstanks 100. In der gezeigten Ausführungsform ist das Verbindungselement 101-2 durch eine Trennwand 121 in eine linke Kammer 123-1 und eine rechte Kammer 123-2 unterteilt. Die beiden Kammern 123-1 und 123-2 sind durch die Trennwand 121 hermetisch voneinander getrennt.

Die linke Kammer 123-1 umfasst eine erste Durchtrittsöffnung 109-1 zum Befüllen des Flüssigkeitstanks 100. Die erste Durchtrittsöffnung 109-1 ist im Bereich der unteren Innenwandung 103 des Flüssigkeitstanks 100 angeordnet. Dadurch wird die Flüssigkeit von Unten in den Flüssigkeitstank 100 eingefüllt. Bei diesem Prozess befindet sich die erste Durchtrittsöffnung 109-1 zumeist unterhalb des Flüssigkeitspegels, so dass eine Schaum- und Blasenbildung beim Befüllen des Flüssigkeitstanks 100 verhindert wird.

Die rechte Kammer 123-2 umfasst eine zweite Durchtrittsöffnung 109-2 zum Entlüften des Flüssigkeitstanks 100. Die zweite Durchtrittsöffnung 109-2 ist im Bereich der oberen Innenwandung 103 des Flüssigkeitstanks 100 angeordnet. Dadurch kann der Flüssigkeitstank 100 nahezu vollständig befüllt werden, bevor ein mit der zweiten Durchtrittsöffnung 109-2 gekoppeltes Entlüftungs- oder Schwimmerventil ein weiteres Ausströmen verhindert.

Die Verbindungselemente 101-1 und 101-2 dienen somit nicht nur zur Übertragung von Zugkräften, sondern gleichzeitig sowohl als Füllstutzen für eine Betankung des Flüssigkeitstanks 100 als auch als Tauchrohr der Befüllbelüftung zur Begrenzung des maximalen Füllstandes. Durch die Integration von mehreren Funktionen in die Verbindungselemente 101-1 und 101-2 kann eine Gewichtersparnis und Platzersparnis erzielt werden. Eine Kompaktifizierung ist insbesondere bei beengtem Bauraum in Kraftfahrzeugen vorteilhaft.

Bei der Verwendung der Verbindungselemente 101-1 und 101-2 als Tauchrohr wird eine stabile Ausführung des Tauchrohres durch beidseitige mechanische Anbindung zwischen einem Boden und einer Decke des Flüssigkeitstanks erreicht. Da durch die Verbindungselemente 101-1 und 101-2 ein Verbiegen oder Verziehen der Wandung des Flüssigkeitstanks verhindert wird, befindet sich die Durchtrittsöffnung 109 stets an der vorgesehenen Position im Inneren des Flüssigkeitstanks 100. Ein Aufblähen oder Zusammenziehen des Flüssigkeitstanks 100 wird aufgrund der unmittelbaren Abstützung an der Durchtrittsöffnung 109 für das Tauchrohr verhindert, so dass sich das durch die Durchtrittsöffnung 109 vorgegebene Abschaltniveau bei Druckschwankungen nicht verändert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Flüssigkeitstank
- 101-1: Verbindungselement
- 101-2: Verbindungselement
- 103: Innenwandung
- 105: Inneres
- 107: Verbindungsstelle
- 109: Durchtrittsöffnung
- 109-1: Durchtrittsöffnung
- 109-2: Durchtrittsöffnung
- 111-1: Flüssigkeitstankschale
- 111-2: Flüssigkeitstankschale
- 113: Kanal
- 115: Sieb
- 117: Ventil
- 119: Durchtrittsöffnung
- 121: Trennwand
- 123-1: Kammer
- 123-2: Kammer
- 125: Anschluss
- 127: Haube
- 129: Flüssigkeit

## Patentansprüche

1. Flüssigkeitstank (100) für ein Kraftfahrzeug, mit:
einem ersten Verbindungselement (101-1), das sich von einer Innenwandung (103) des Flüssigkeitstanks (100) in das Innere (105) des Flüssigkeitstanks (100) erstreckt;
einem zweiten Verbindungselement (101-2), das sich von der Innenwandung (103) des Flüssigkeitstanks (100) in das Innere (105) des Flüssigkeitstanks (100) erstreckt und das an einer Verbindungsstelle (107) mit dem ersten Verbindungselement (101-2) verbunden ist; und
einer Durchtrittsöffnung (109) zum Durchleiten eines Fluids, die in dem ersten oder zweiten Verbindungselement (101-1, 101-2) angeordnet ist.

2. Flüssigkeitstank (100) nach Anspruch 1, wobei die Durchtrittsöffnung (109) benachbart zu der Verbindungsstelle (107) zwischen dem ersten und dem zweiten Verbindungselement (101-1, 101-2) angeordnet ist.

3. Flüssigkeitstank (100) nach Anspruch 2, wobei die Durchtrittsöffnung (109) benachbart zu der Innenwandung (103) des Flüssigkeitstanks (100) angeordnet ist.

4. Flüssigkeitstank (100) nach einem der vorangehenden Ansprüche, wobei innerhalb des zweiten Verbindungselementes (101-2) ein U-förmiger Kanal (113) für einen Flüssigkeitsverschluss gebildet ist.

5. Flüssigkeitstank (100) nach einem der vorangehenden Ansprüche, wobei das zweite Verbindungselement (101-2) ein Sieb (115) zum Filtern des Fluids aufweist.

6. Flüssigkeitstank (100) nach einem der vorangehenden Ansprüche, wobei das zweite Verbindungselement (101-2) ein Ventil (117) zum Sperren einer Fluidrichtung aufweist.

7. Flüssigkeitstank (100) nach einem der vorangehenden Ansprüche, wobei das zweite Verbindungselement (101-2) eine Mehrzahl von Durchtrittsöffnungen aufweist.

8. Flüssigkeitstank (100) nach Anspruch 7, wobei eine erste Durchtrittsöffnung der Mehrzahl von Durchtrittsöffnungen gegenüber einer zweiten Durchtrittsöffnung der Mehrzahl von Durchtrittsöffnungen liegt.

9. Flüssigkeitstank (100) nach Anspruch 7, wobei die Durchtrittsöffnungen entlang des zweiten Verbindungselementes (101-2) angeordnet sind.

10. Flüssigkeitstank (100) nach einem der vorangehenden Ansprüche, wobei das zweite Verbindungselement (101-2) durch eine Trennwand (121) in eine erste Kammer (123-1) und eine zweite Kammer (123-2) unterteilt ist.

11. Flüssigkeitstank (100) nach einem der vorangehenden Ansprüche, wobei die erste Kammer (123-1) eine erste Durchtrittsöffnung (109-1) zum Befüllen des Flüssigkeitstanks (100) umfasst und die zweite Kammer (123-2) eine Durchtrittsöffnung (109-2) zum Entlüften des Flüssigkeitstanks (100) umfasst.

12. Flüssigkeitstank (100) nach einem der vorangehenden Ansprüche, wobei das zweite Verbindungselement (101-2) einen Schwimmer umfasst.

13. Flüssigkeitstank (100) nach einem der vorangehenden Ansprüche, wobei die Verbindungsstelle (107) eine Verbindungsöffnung (119) zum Durchleiten des Fluids zwischen dem ersten Verbindungselement (101-1) und dem zweiten Verbindungselement (101-2) aufweist.

14. Flüssigkeitstank (100) nach einem der vorangehenden Ansprüche, wobei der Flüssigkeitstank (100) aus einer ersten Flüssigkeitstankschale (111-1) mit dem ersten Verbindungselement (101-1) und einer zweiten Flüssigkeitstankschale (111-2) mit dem zweiten Verbindungselement (101-2) zusammengesetzt ist.

15. Flüssigkeitstank (100) nach einem der vorangehenden Ansprüche, wobei das erste oder das zweite Verbindungselement (101-1, 101-2) eine Zylinderform aufweist.
